# EUROPEAN PATENT APPLICATION

(11) **EP 4 101 622 A1**
(43) Date of publication of application: **14.12.2022**
(21) Application number: 22177438.3
(22) Date of filing: 07.06.2022
(51) Int. Cl.: B29C 64/165, B29C 64/218, B29C 64/343, B29C 64/393, B33Y 10/00, B33Y 30/00, B33Y 40/00, B33Y 50/02

(54) **THREE-DIMENSIONAL FABRICATION SYSTEM, THREE-DIMENSIONAL FABRICATION METHOD, AND CARRIER MEDIUM**

(30) Priority: 08.06.2021 JP 2021095667
(71) Applicant: Ricoh Company, Ltd., Tokyo 143-8555 (JP)
(72) Inventor: NISHI, Ryohsuke, Tokyo, 143-8555 (JP); YOROZU, Yasuaki, Tokyo, 143-8555 (JP)
(74) Representative: SSM Sandmair

(57) **Abstract**

A three-dimensional fabrication system (1000) includes, a supply device (12) that supplies a fabrication material (20) to form a fabrication material layer (31), an application device (5) that applies a binder (10) to the fabrication material layer (31), and circuitry (500). The circuitry (500) determines a fabrication control condition based on data of a shape of a three-dimensional object to be fabricated, to form the fabrication material layer (31) having a biased distribution of a density of the fabrication material (20).

## Description

### BACKGROUND

### Technical Field

Embodiments of the present disclosure relate to a three-dimensional fabrication system, a three-dimensional fabrication method, and a carrier medium carrying computer readable code for carrying out the three-dimensional fabrication method.

### Related Art

A three-dimensional fabrication method includes a binder jetting. In the binder jetting, a fabrication material such as powder is spread in a layer (i.e., a recoating process), and a binder is selectively applied to the layer of the spread fabrication material, thereby solidifying the fabrication material to fabricate a three-dimensional object. The productivity of the three-dimensional object is preferably increased, but the recoating process in the binder jetting causes a production bottleneck. The speedup of the recoating process may lead to non-uniformity of the density of the powder (powder density), which may cause defective fabrication. For this reason, a technique for making the density uniform is known.

For example, Japanese Unexamined Patent Application Publication No. 2018-154042 discloses a technique for uniformly forming a powder layer with a high powder density. This technique prevents dragging and expansion of a layered structure in a lower powder layer caused by movement of a flattening member. Japanese Unexamined Patent Application Publication No. 2018-154042 discloses a three-dimensional fabrication apparatus that fabricates a three-dimensional object. The flattening member moves to transfer and flatten powder to form the powder layer (flattening process). Powder in the powder layer is bound in a desired shape to form the layered structure (fabrication process). The three-dimensional fabrication apparatus repeatedly performs the flattening process and the fabrication process to fabricate the three-dimensional object in which the layered structures are stacked. In this three-dimensional fabrication apparatus, a frictional force between the flattening member and the powder in a latter flattening process is smaller than the frictional force in a former flattening process.

In the binder jetting, a three-dimensional object once formed is subjected to sintering as a post-treatment to obtain a final product. However, even if the powder density is uniform, a silver body after sintering may deform (e.g., bend) depending on the shape of a green body before sintering. Note that the silver body is also referred to as a sintered body and hereinafter referred to as an "S body", and the green body is also referred to as a compacted powder or a sintering precursor, and hereinafter referred to as a "G body."

### SUMMARY

The present disclosure has been made in view of the above-described situation, and an object thereof is to provide a three-dimensional fabrication system that fabricates a three-dimensional object without deformation due to a post-treatment.

Embodiments of the present disclosure describes an improved three-dimensional fabrication system that includes a supply device that supplies a fabrication material to form a fabrication material layer, an application device that applies a binder to the fabrication material layer, and circuitry. The circuitry determines a fabrication control condition based on data of a shape of a three-dimensional object to be fabricated, to form the fabrication material layer having a biased distribution of a density of the fabrication material.

According to other embodiments of the present disclosure, there are provided a three-dimensional fabrication method and a carrier medium carrying computer readable code for controlling a computer system to carry out the three-dimensional fabrication method. The three-dimensional fabrication method includes supplying a fabrication material to form a fabrication material layer, applying a binder to the fabrication material layer, determining a fabrication control condition based on data of a shape of a three-dimensional object to be fabricated, and forming the fabrication material layer having a biased distribution of a density of the fabrication material under the fabrication control condition.

With the above configuration, a three-dimensional fabrication system can be provided that fabricates a three-dimensional object without deformation due to a post-treatment.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic plan view of a three-dimensional fabrication apparatus according to an embodiment of the present disclosure;
FIG. 2 is a schematic side view of the three-dimensional fabrication apparatus according to the present embodiment;
FIG. 3 is a schematic cross-sectional view of a fabrication section of the three-dimensional fabrication apparatus according to the present embodiment;
FIG. 4 is a block diagram of a three-dimensional fabrication system according to the present embodiment;
FIG. 5 is a functional block diagram of a controller of the three-dimensional fabrication apparatus according to the present embodiment;
FIG. 6 is a diagram illustrating a method of controlling a density of powder in the three-dimensional fabrication apparatus according to the present embodiment;
FIGS. 7A to 7D are diagrams illustrating a method of determining a fabrication control condition for obtaining a predetermined density distribution of the powder; and
FIG. 8 is a flowchart of a three-dimensional fabrication method performed by the three-dimensional fabrication apparatus according to the present embodiment.

The accompanying drawings are intended to depict embodiments of the present disclosure and should not be interpreted to limit the scope thereof. The accompanying drawings are not to be considered as drawn to scale unless explicitly noted. In addition, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected, and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Although some embodiments of the present disclosure are described below with reference to specific embodiments, embodiments of the present disclosure are not limited to the embodiments described below. In the drawings referred to below, the same reference numerals are used for the common elements, and the description of which are omitted as appropriate.

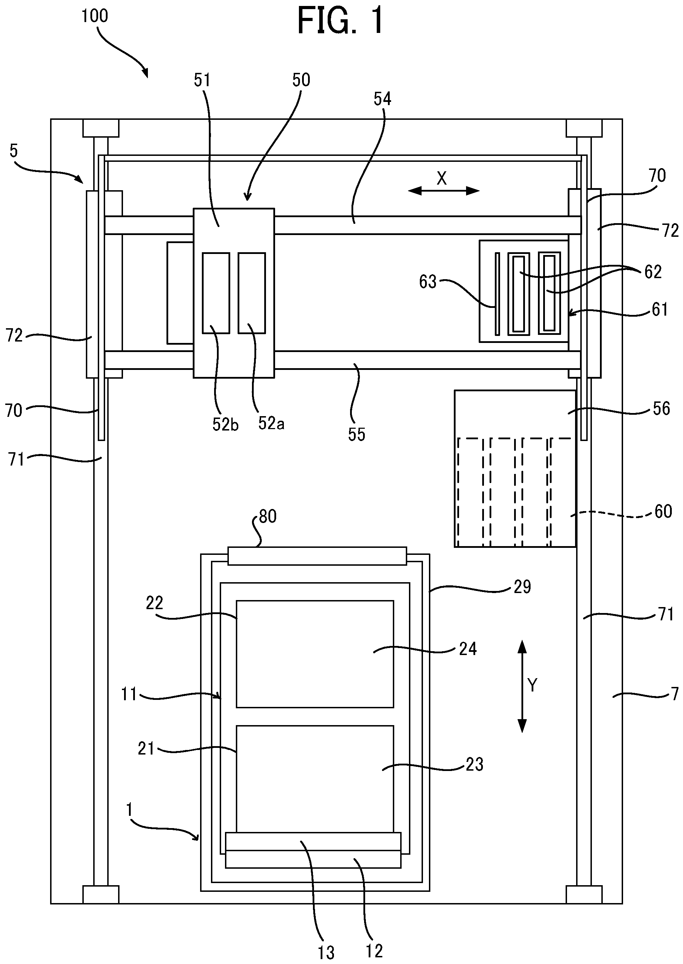

An example of a three-dimensional fabrication apparatus 100 according to an embodiment of the present disclosure is described with reference to FIGS. 1 to 3.

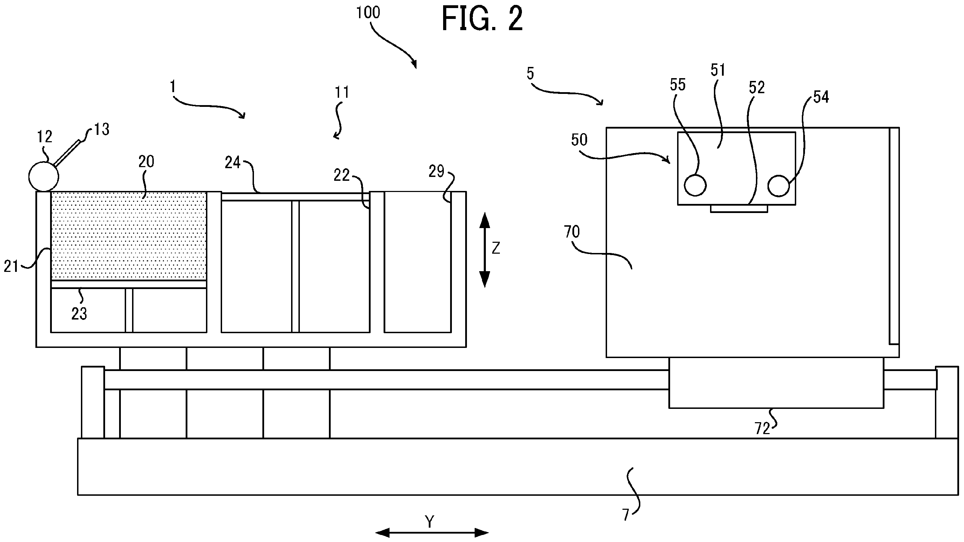

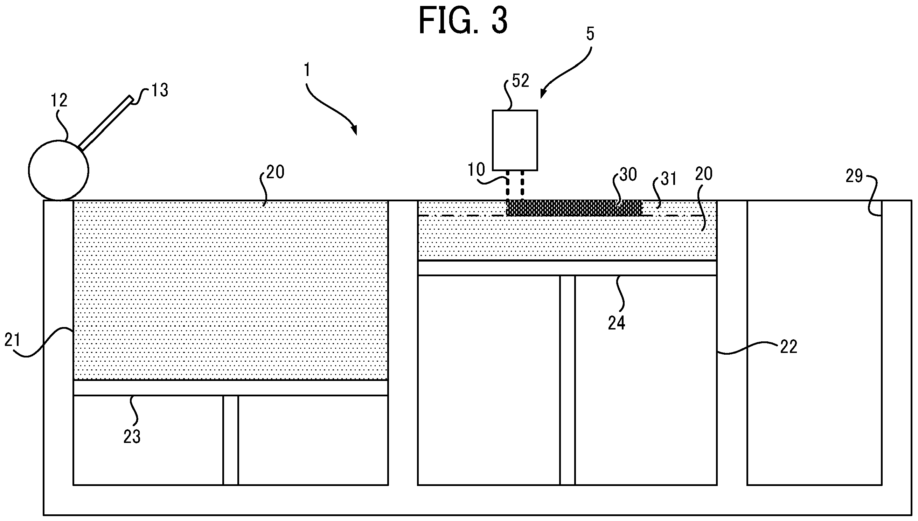

FIG. 1 is a schematic plan view of the three-dimensional fabrication apparatus 100. FIG. 2 is a schematic side view of the three-dimensional fabrication apparatus 100. FIG. 3 is a cross-sectional view of a fabrication section 1 of the three-dimensional fabrication apparatus 100. FIG. 3 illustrates the fabrication section 1 when fabricating a three-dimensional object.

The three-dimensional fabrication apparatus 100 (also referred to as a powder fabrication apparatus) includes the fabrication section 1 and a fabrication unit 5. As illustrated in FIG. 3, the fabrication unit 5 as an application device discharges fabrication liquid 10 as a binder onto a powder layer 31 that is a layer of a fabrication material, such as powder 20, spread in the fabrication section 1, thereby binding the powder 20 to form a fabrication layer 30 in the fabrication section 1.

The fabrication section 1 includes a powder chamber 11 and a recoater roller 12 serving as a supply device (i.e., a recoater) that transfers and supplies the powder 20 to the powder chamber 11. The supply device may be, for example, a plate (e.g., a blade) instead of the rotator such as the recoater roller 12. A cleaning blade 13 of a cleaning device contacts the circumferential surface of the recoater roller 12 to clean the recoater roller 12.

The powder chamber 11 includes a supply chamber 21, a fabrication chamber 22, and a surplus powder chamber 29. The supply chamber 21 stores the powder 20 to be supplied to the fabrication chamber 22. Fabrication layers 30 are stacked in the fabrication chamber 22 to fabricate a three-dimensional object. A surplus of the powder 20 supplied to the fabrication chamber 22 is collected in the surplus powder chamber 29.

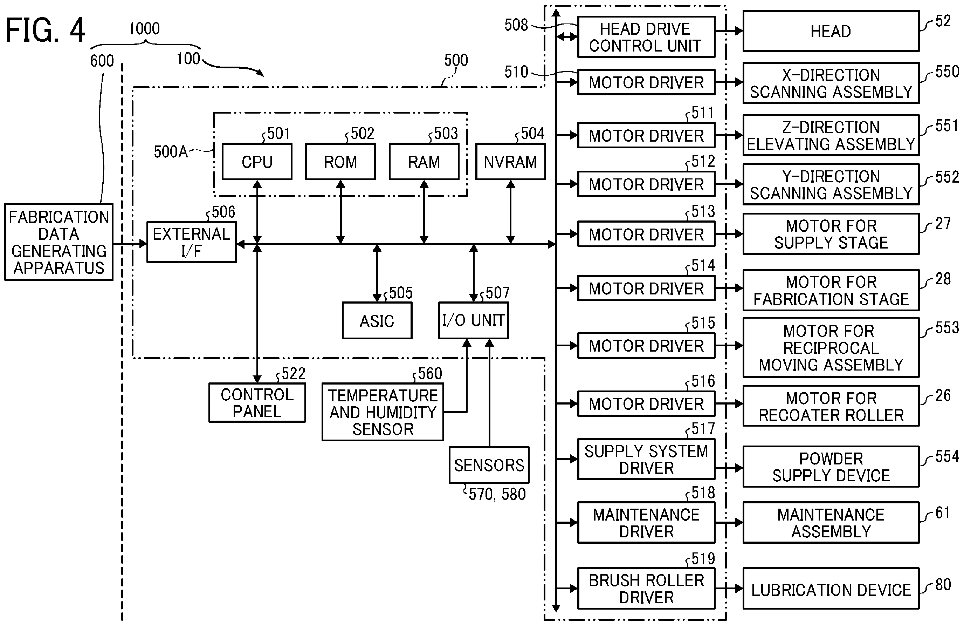

A supply stage 23 that is a bottom portion of the supply chamber 21 is movable in the vertical direction (height direction). A fabrication stage 24 that is a bottom portion of the fabrication chamber 22 is movable in the vertical direction (height direction). The fabrication layers 30 are stacked on the fabrication stage 24 to form a layered structure, thereby fabricating a three-dimensional object in a desired shape. A motor 27 (see FIG. 4) moves the supply stage 23 upward and downward in the Z direction (height direction) indicated by arrow Z in FIG. 2. Likewise, a motor 28 (see FIG. 4) moves the fabrication stage 24 upward and downward in the Z direction.

Side faces of the supply stage 23 contact inner side faces of the supply chamber 21. Side faces of the fabrication stage 24 contact inner side faces of the fabrication chamber 22. The upper surfaces of the supply stage 23 and the fabrication stage 24 are kept horizontal.

A powder supply device 554 (see FIG. 4) is provided for the supply chamber 21. The powder supply device 554 supplies powder 20 in a tank of the powder supply device 554 to the supply chamber 21 at the time of an initial operation of a fabrication process or when an amount of the powder 20 in the supply chamber 21 decreases. Examples of a method of a powder conveyance for supplying the powder 20 include a screw conveyor system using a screw and an air conveyance system using air.

The recoater roller 12 transfers and supplies the powder 20 stored on the supply stage 23 of the supply chamber 21 to the fabrication chamber 22, and smooths and flattens the surface of the powder 20 supplied to the fabrication chamber 22 to form the powder layer 31 having a predetermined thickness. The recoater roller 12 has a length longer than an inside dimension of the fabrication chamber 22 and the supply chamber 21 in the axial direction. The reciprocal moving assembly reciprocally moves the recoater roller 12 in the Y direction indicated by arrow Y in FIG. 2 along a stage surface (a surface on which the powder 20 is loaded) of the fabrication stage 24.

The recoater roller 12 is rotationally driven by a motor 26 (see FIG. 4). The recoater roller 12 horizontally moves forward and backward so as to pass through an area above the supply chamber 21 and the fabrication chamber 22 while being rotated by the motor 26. As a result, the powder 20 in the supply chamber 21 is transferred and supplied to the fabrication chamber 22, and the recoater roller 12 transfers and flattens the powder 20 while passing over the fabrication chamber 22, thus forming the powder layer 31 having a desired thickness.

The fabrication unit 5 includes a liquid discharge unit 50 that discharges (applies) the fabrication liquid 10 (also referred to as a binder) for binding the powder 20 to the powder layer 31 on the fabrication stage 24 to form the fabrication layer 30 in which the powder 20 is bound by the fabrication liquid 10.

The liquid discharge unit 50 includes a carriage 51 and two liquid discharge heads 52a and 52b (hereinafter referred to as simply "head(s) 52" unless distinguished) mounted on the carriage 51. In FIG. 1, the two heads 52 are illustrated. However, in other embodiments, the number of the heads 52 may be one, or three or more.

The carriage 51 is movably held by guides 54 and 55. The guides 54 and 55 are held by side plates 70 on both sides so as to be movable up and down. An X-direction scanning motor of an X-direction scanning assembly 550 (see FIG. 4) reciprocally moves the carriage 51 in the X direction indicated by arrow X in FIG. 1 via a pulley and a belt. The X direction is the same as the main scanning direction.

Each of the two heads 52a and 52b includes two nozzle rows in each of which a plurality of nozzles is arranged to discharge the fabrication liquid 10. Two nozzle rows of one head 52a discharge, for example, cyan fabrication liquid and magenta fabrication liquid. Two nozzle rows of the other head 52b discharge, for example, yellow fabrication liquid and black fabrication liquid.

A plurality of tanks 60 is mounted on a tank mount 56 and stores the cyan fabrication liquid, the magenta fabrication liquid, the yellow fabrication liquid, and the black fabrication liquid, respectively. The cyan, magenta, yellow, and black fabrication liquids are supplied to the heads 52a and 52b via supply tubes.

The configuration of the head 52 is not limited thereto, and the heads 52 may discharge fabrication liquids of colors other than cyan, magenta, yellow, and black. The fabrication liquids may be colorless, or colorless and clear, may be a single color, or may include only two colors or three colors of the above-described colors. Further, various types of fabrication liquids having different properties may be prepared for the same color.

A maintenance assembly 61 for maintaining and recovering the heads 52 of the liquid discharge unit 50 is disposed on one side (right side in FIG. 1) in the X direction. The maintenance assembly 61 includes caps 62 and a wiper 63. The caps 62 of the maintenance assembly 61 contacts a nozzle surface (a surface on which the nozzles are arranged) of the heads 52, and suck fabrication liquid 10 from the nozzles to discharge high-viscosity fabrication liquid 10 and powder 20 blocking the nozzles. Then, the wiper 63 of the maintenance assembly 61 wipes the nozzle surface to form meniscus of the fabrication liquid 10 in the nozzles. When the fabrication liquid 10 is not discharged, the maintenance assembly 61 covers the nozzle surfaces of the heads 52 with the caps 62 to prevent powder 20 from entering the nozzles and to prevent the fabrication liquid 10 from drying.

The fabrication unit 5 includes a slider 72 slidably supported by a guide 71 disposed above a base 7. The entire fabrication unit 5 is reciprocally movable in the Y direction (sub-scanning direction) perpendicular to the X direction. A Y-direction scanning assembly 552 (see FIG. 4) reciprocally moves the entire fabrication unit 5 in the Y direction.

The liquid discharge unit 50 is movable upward and downward in the Z direction together with the guides 54 and 55. A Z-direction elevating assembly 551 (see FIG. 4) raises and lowers the liquid discharge unit 50 in the Z direction.

A general outline of a three-dimensional fabrication system 1000 according to the present embodiment is described with reference to FIG. 4.

FIG. 4 is a block diagram mainly illustrating a controller 500 of the three-dimensional fabrication apparatus 100. The controller 500 includes a main controller 500A including a central processing unit (CPU) 501, a read only memory (ROM) 502, and a random access memory (RAM) 503. The CPU 501 controls the entire system of the three-dimensional fabrication apparatus 100 according to the present embodiment. The ROM 502 stores programs, which include a program to cause the CPU 501 to perform the control of fabricating a three-dimensional object, and other fixed data. The RAM 503 temporarily stores fabrication data and the like.

The controller 500 further includes a nonvolatile RAM (NVRAM) 504 that retains data while the apparatus is powered off. The controller 500 further includes an application specific integrated circuit (ASIC) 505 to perform image processing in which various signal processing is performed on image data and processing of input and output signals for controlling the entire apparatus.

The controller 500 further includes an external interface (I/F) 506 to send and receive data and signals when the controller 500 receives fabrication data from a fabrication data generating apparatus 600 (an external device). The fabrication data generating apparatus 600 generates the fabrication data in which a final-form object (three-dimensional object) is sliced in multiple fabrication layers. For example, the fabrication data generating apparatus 600 is constructed of a data processor such as a personal computer. The controller 500 further includes an input-output (I/O) unit 507 to receive detection signals of various sensors. Detected signals of a temperature and humidity sensor 560 to detect the temperature and the humidity as the environment condition of the device and detected signals from other sensors are input into the I/O unit 507. Other sensors include a shape sensor 570 as a measurement device and a density sensor 580 as a detection device, which are described later.

The controller 500 further includes a head drive control unit 508 to control driving of the head 52 of the liquid discharge unit 50. The controller 500 further includes a motor driver 510 that drives a motor included in the X-direction scanning assembly 550. The X-direction scanning assembly 550 moves the carriage 51 of the liquid discharge unit 50 in the X direction (main scanning direction). The controller 500 further includes a motor driver 512 that drives a motor included in the Y-direction scanning assembly 552. The Y-direction scanning assembly 552 moves the fabrication unit 5 in the Y direction (sub-scanning direction). The controller 500 further includes a motor driver 511 that drives a motor included in the Z-direction elevating assembly 551. The Z-direction elevating assembly 551 moves (raises and lowers) the carriage 51 of the liquid discharge unit 50 in the Z direction. The Z-direction elevating assembly 551 may move (raises and lowers) the entire fabrication unit 5 in the Z-direction.

The controller 500 further includes a motor driver 513 that drives the motor 27 for raising and lowering the supply stage 23. The controller 500 further includes a motor driver 514 that drives the motor 28 for raising and lowering the fabrication stage 24. The controller 500 further includes a motor driver 515 that drives a motor 553 of the reciprocal moving assembly for moving the recoater roller 12. The controller 500 further includes a motor driver 516 that drives the motor 26 for rotating the recoater roller 12.

The controller 500 further includes a supply system driver 517 that drives the powder supply device 554 for supplying powder 20 to the supply chamber 21. The controller 500 further includes a maintenance driver 518 that drives the maintenance assembly 61 of the liquid discharge unit 50. The controller 500 further includes a brush roller driver 519 that drives a brush roller of a lubrication device 80. The lubrication device 80 applies a lubricant to the circumferential surface of the recoater roller 12 to reduce the coefficient of friction of the circumferential surface of the recoater roller 12. The controller 500 is connected to a control panel 522 to input and display necessary data.

In the above-described embodiment, the three-dimensional fabrication apparatus 100 transfers powder 20 in the supply chamber 21 to the fabrication chamber 22 by the recoater roller 12 to form the powder layer 31, and discharges liquid having a function of binding the powder 20, that is, the fabrication liquid 10 (or binder) to the formed powder layer 31 from the head 52. Thus, only the portion of the powder layer 31 to which the fabrication liquid 10 is discharged is selectively solidified, thereby forming the fabrication layer 30 which corresponds to one layer of the three-dimensional object to be fabricated. Then, the three-dimensional fabrication apparatus 100 repeatedly form an additional fabrication layer 30 multiple times to fabricate a desired three-dimensional object. In the following description, the three-dimensional fabrication apparatus 100 adopts the above-described method. However, embodiments of the three-dimensional fabrication apparatus 100 using powder is not limited to the above-described method in which the powder 20 in the supply chamber 21 is transferred to the fabrication chamber 22 by the recoater roller 12 to form the powder layer 31. In another embodiment, a supply device drops powder 20 from above to form a powder layer 31. For example, the supply device including a sieve stores the powder 20 and drops the powder 20 from a powder supply port disposed in a lower portion thereof.

In the embodiment described above, the fabrication data generating apparatus 600 is the external device separated from and externally connected to the three-dimensional fabrication apparatus 100. In this case, the three-dimensional fabrication system 1000 includes the fabrication data generating apparatus 600 and the three-dimensional fabrication apparatus 100, and further includes a post-treatment apparatus if desired. However, the configuration of the three-dimensional fabrication system 1000 is not limited to the above-described configuration. For example, the three-dimensional fabrication apparatus 100 may have the function of the fabrication data generating apparatus 600, or fabrication data may be provided by a cloud service or the like. In this case, the three-dimensional fabrication system 1000 may include the three-dimensional fabrication apparatus 100 alone or a combination of the three-dimensional fabrication apparatus 100 and the post-treatment apparatus.

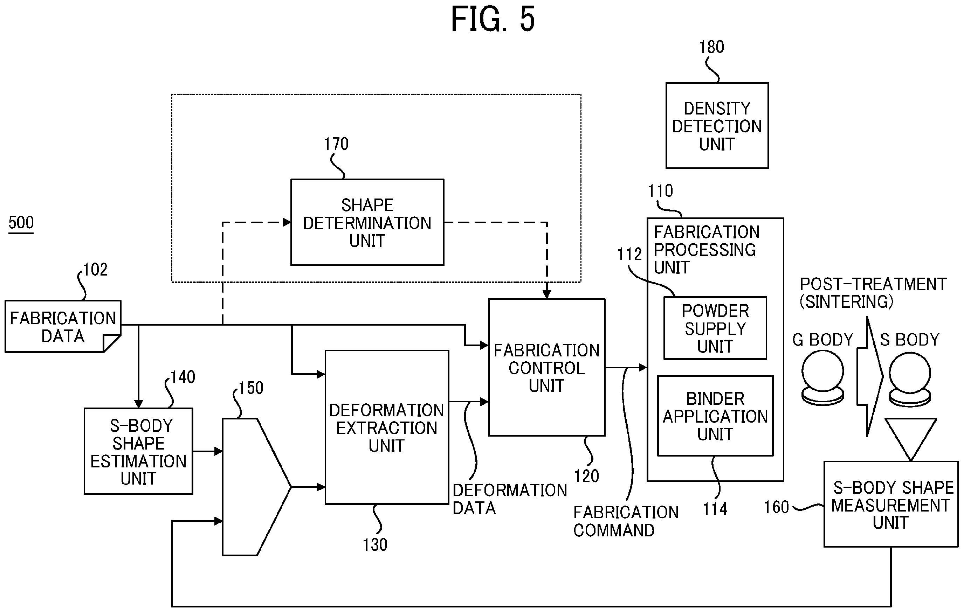

FIG. 5 is a functional block diagram of the controller 500 of the three-dimensional fabrication apparatus 100 according to the present embodiment. As illustrated in FIG. 5, the controller 500 of the three-dimensional fabrication apparatus 100 includes functional blocks including a fabrication processing unit 110, a fabrication control unit 120, and a deformation extraction unit 130.

The fabrication processing unit 110 operates each function (mechanical function and electrical function) of the three-dimensional fabrication apparatus 100 in response to a fabrication command. More specifically, the fabrication processing unit 110 includes a powder supply unit 112 and a binder application unit 114.

The powder supply unit 112 serves as a supply unit according to the present embodiment to supply powder 20 as a fabrication material and forms the powder layer 31 as a fabrication material layer. The powder supply unit 112 causes the motor driver 513 and the motor driver 514 to raise and lower the supply stage 23 and the fabrication stage 24 in response to the fabrication command. The powder supply unit 112 also causes the motor driver 515 and the motor driver 516 to move and rotate the recoater roller 12 in response to the fabrication command to supply the powder 20 to the fabrication chamber 22. The powder supply unit 112 further cause the supply system driver 517 to drives the powder supply device 554 that supplies the powder 20 to the supply chamber 21.

That is, the powder supply unit 112 controls the operations of the above-described drivers to form the powder layer 31 having a predetermined thickness. Specifically, under the control of the powder supply unit 112, powder 20 is appropriately supplied to the supply chamber 21, and the recoater roller 12 transfers and supplies the powder 20 stored on the supply stage 23 of the supply chamber 21 to the fabrication chamber 22 and smooths and flatten the surface of the powder 20 supplied to the fabrication chamber 22, thereby forming the powder layer 31 having the predetermined thickness. When one fabrication layer has been formed, the supply stage 23 is raised by a distance corresponding to a thickness of the one fabrication layer 30, and the fabrication stage 24 is lowered by the distance. The powder supply unit 112 repeats the operations described above.

The binder application unit 114 serves as an application unit according to the present embodiment to apply the fabrication liquid 10 as a binder to the prepared powder layer 31. The binder application unit 114 causes the motor driver 510, the motor driver 512, and the motor driver 511 in response to the fabrication command to operates the X-direction scanning assembly 550, the Y-direction scanning assembly 552, and the Z-direction elevating assembly 551, thereby positioning the fabrication unit 5 in the X direction, the Y direction, and the Z direction. The binder application unit 114 causes the head drive control unit 508 in response to the fabrication command to drive the head 52 of the liquid discharge unit 50, thereby discharging (applying) the fabrication liquid 10 acting as a binder.

The fabrication control unit 120 generates a fabrication command for controlling the fabrication processing unit 110 based on fabrication data 102 input to the fabrication control unit 120 and outputs the fabrication command to the fabrication processing unit 110. The fabrication data 102 is obtained by slicing a desired shape of the three-dimensional object into layers each having the predetermined thickness.

In the present embodiment, the powder layer (fabrication material layer) is a layer of powder (fabrication material) having the predetermined thickness, which is spread in a layer for fabricating one layer of the three-dimensional object based on the fabrication data. The fabrication layer is the one layer of the three-dimensional object, that is, the powder layer (fabrication material layer) solidified by applying the fabrication liquid (binder) thereto. An aggregation of multiple fabrication layers is referred to as a layered structure, and the aggregation in the desired final shape is referred to as the three-dimensional object.

The three-dimensional object fabricated by the fabrication processing unit 110 is subjected to a post-treatment such as degreasing and sintering, thereby completing a final product. The three-dimensional object before the post-treatment is referred to as a precursor, and the three-dimensional object after the post-treatment is referred to as a completed body. In particular, when the powder is metal and the post-treatment includes sintering, the three-dimensional object before sintering is referred to as a green body, and the three-dimensional object after sintering is referred to as a silver body. Note that the green body is also referred to as a compacted powder or a sintering precursor and hereinafter referred to as a "G body," and the silver body is also referred to as a sintered body and hereinafter referred to as an "S body." In the following description, the sintering is performed as the post-treatment.

As described above, the G body fabricated by the fabrication processing unit 110 becomes the S body by sintering. In general, the S body may contract or deform from the G body after sintering. A technique is known that uniformizes a density of powder (powder density) in the powder layer 31 in order to avoid defective fabrication. However, as described above, depending on the shape of the G body before sintering, the S body may deform after sintering even if the powder density in the powder layer 31 is uniform. Some methods are known to prevent the S body from deforming, such as a method of applying reverse correction to the shape to be fabricated, a method of adding a support, and the like, but these methods are not sufficient because of high difficulty and high cost.

Therefore, the fabrication control unit 120 according to the present embodiment determines a fabrication control condition so as to form the powder layer 31 having a biased distribution of the powder density to prevent the S body from deforming after the sintering. The fabrication control unit 120 causes the fabrication processing unit 110 to form the powder layer 31 having the biased distribution of the powder density in an intended portion based on the shape of the G body, but may uniformize the distribution of the powder density in the other portion. Note that the fabrication control condition for forming the powder layer 31 having the biased distribution of the powder density does not mean that the powder layer 31 accidentally has an unintended biased distribution of the powder density that increases the deformation of the S body after sintering.

As described above, in the embodiment described below, the fabrication material is the powder 20, and the binder is the fabrication liquid 10 which is a liquid. The fabrication control condition to be controlled includes at least one of a fabrication material supply condition for spreading the powder 20 in the fabrication chamber 22 and a binder application condition for applying the fabrication liquid 10 to the powder layer 31. The powder density in the powder layer 31 is mainly affected by how to spread the powder 20 when the binder application condition, such as an amount of the fabrication liquid 10 applied to the powder layer 31 and a type of the fabrication liquid 10, is constant. That is, the powder density is defined in a state of the powder layer 31 in which the powder 20 is spread without the fabrication liquid 10. The amount of the fabrication liquid 10 and the type of the fabrication liquid 10 may change an agglomeration state of the powder 20 due to the capillary force when the fabrication liquid 10 is applied, and the characteristics of the S body may change due to the agglomeration state of the powder 20. Therefore, when the fabrication control condition includes the binder application condition, the powder density in the powder layer 31 is defined in a state of the powder layer 31 to which the fabrication liquid 10 is applied. Although the powder density can be obtained by dividing the weight of the powder 20 by a predetermined volume, the definition of the powder density may be different depending on the definition of the volume. In the present embodiment, the powder density is simply defined as a bulk density obtained from the weight of the powder 20 filled in a space having a constant volume.

In consideration of the deformation of the S body described above, the deformation extraction unit 130 receives data of an ideal shape obtained from the fabrication data and comparison data of a shape of the S body after sintering, extracts deformation data that is a difference between both data, and outputs the deformation data to the fabrication control unit 120. The deformation extraction unit 130 is an example of an extraction unit according to the present embodiment that compares the shape of the S body with the shape of the three-dimensional object to be fabricated to extract the deformation data.

The fabrication control unit 120 issues a command to change the fabrication control condition (at least one of the fabrication material supply condition and the binder application condition) that affects the powder density described above, based on the deformation data, to form the powder layer 31 having a biased distribution of the powder density.

There are two types of comparison data in the embodiment described below. One is data based on a measured shape of the S body that is the sintered G body. The other is data based on an estimated shape of the S body when the G body is sintered, which is estimated by simulation.

As illustrated in FIG. 5, the controller 500 of the three-dimensional fabrication apparatus 100 according to the present embodiment further includes an S-body shape estimation unit 140, a selection switch 150, and an S-body shape measurement unit 160.

The S-body shape estimation unit 140 simulates sintering of the G body to estimate the shape of the S-body after sintering based on data (a series of fabrication data or three-dimensional model data before being sliced) of the three-dimensional object to be fabricated, and outputs data of the estimated shape of the S body (i.e., S-body estimation data). A simulation of the shape of the S body changed by sintering is not particularly limited, and a method based on a finite element method (FEM) can be adopted. In the simulation, the powder density in the powder layer 31 is not particularly limited and may be assumed to be uniform. The S-body estimation data as the comparison data is sliced at a position corresponding to the fabrication data to be processed. For example, when the three-dimensional object has 100 layers, the estimated three-dimensional shape is divided into 100 layers in the corresponding S-body estimation data. That is, the S-body shape estimation unit 140 is an example of an estimation unit according to the present embodiment to estimate the shape of the sintered body obtained by sintering the sintering precursor. The sintering precursor is formed of the powder 20 to which the fabrication liquid 10 is applied.

The S-body shape measurement unit 160 causes the shape sensor 570 to measure the shape of the S-body obtained by actually sintering the G-body, and outputs data of the measured shape of the S body (i.e., S-body actual measurement data). The shape sensor 570 as the measurement device is not particularly limited, and may employ a non-contact three-dimensional measurement using a computer numerical control three-dimensional measuring machine and a non-contact line laser, a contact three-dimensional measurement, or a spatial scanning using a three-dimensional laser scanner to measure the shape of the S body. The S-body actual measurement data as the comparison data is sliced at a position corresponding to the fabrication data to be processed. For example, when the three-dimensional object has 100 layers, the measured three-dimensional shape is divided into 100 layers in the corresponding S-body actual measurement data. That is, the S-body shape measurement unit 160 is an example of a measurement unit according to the present embodiment to cause the measurement device to measure the shape of the sintered body obtained by sintering the sintering precursor. The sintering precursor is formed of the powder 20 to which the fabrication liquid 10 is applied.

The selection switch 150 receives the S-body estimation data from the S-body shape estimation unit 140 and the S-body actual measurement data from the S-body shape measurement unit 160, and outputs one of the S-body estimation data and the S-body actual measurement data assigned to the comparison data by the setting to the deformation extraction unit 130. Thus, the comparison data input to the deformation extraction unit 130 is selected from two of the S-body estimation data and the S-body actual measurement data by the selection switch 150.

In the above-described embodiment, the fabrication control unit 120 changes the fabrication control condition based on the deformation data. However, since the ease of deformation changes depending on the feature of the shape, the ease of deformation at each location can be estimated to some extent based on the fabrication data or three-dimensional model data for one layer. For this reason, a shape determination unit 170 may be provided as indicated by a dotted rectangle in FIG. 5 instead of the S-body shape estimation unit 140, the S-body shape measurement unit 160, and the deformation extraction unit 130. In this case, the shape determination unit 170 determines whether the S body is likely to deform from the G body based on the shape of the three-dimensional object to be fabricated (a series of fabrication data or three-dimensional model data). In other words, the shape determination unit 170 determines whether the three-dimensional object to be fabricated satisfies a shape condition defining a deformable shape. Then, the fabrication control unit 120 changes the fabrication control condition that affects the powder density at a predetermined position in the powder layer 31, based on whether the S body deforms from the G body at the predetermined position. The shape condition for determining whether the S body deforms from the G body is prepared in advance to detect the deformable shape of the three-dimensional object to be fabricated. For example, a shape pattern may be prepared as the shape condition for capturing the deformable shape such as a thin portion, a slim portion, or a tapered portion.

The controller 500 of the three-dimensional fabrication apparatus 100 according to the embodiment described with reference to FIG. 5 may include a density detection unit 180. The density detection unit 180 causes the density sensor 580 as the detection device to detect the distribution of the powder density in the prepared powder layer 31. The density detection unit 180 is used to measure the powder density under a certain fabrication control condition and calibrate a relation between the powder density and the fabrication control condition. Alternatively, the density detection unit 180 is used to feedback to the fabrication control unit 120 to adjust the fabrication control condition so as to generate a desired biased distribution of the powder density.

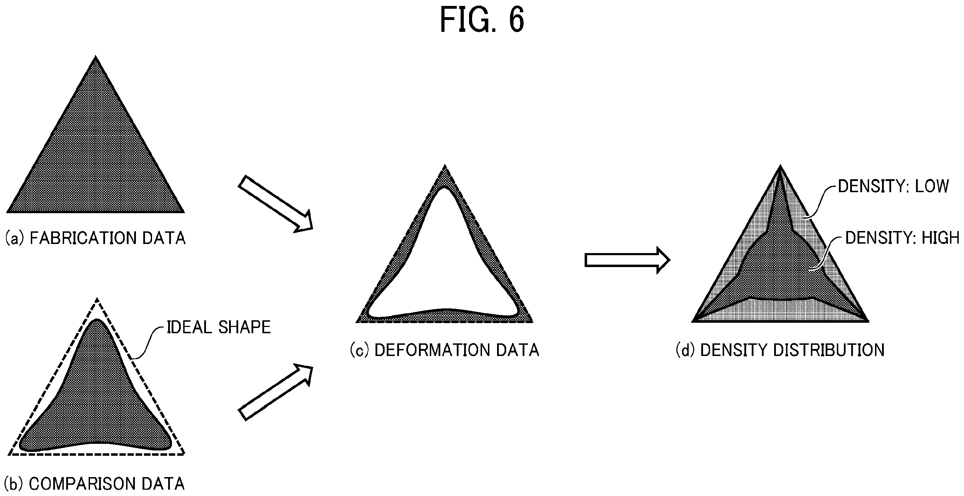

A description is given below of a method of controlling the powder density in the three-dimensional fabrication apparatus 100 according to the present embodiment with reference to FIG. 6. The deformation extraction unit 130 illustrated in FIG. 5 compares a shape indicated by fabrication data (a) in FIG. 6 and a shape indicated by comparison data (b) in FIG. 6, obtains a difference between the shapes, and extracts deformation data (c) as illustrated in FIG. 6. Note that the fabrication data is ideal data. Either the S-body actual measurement data obtained by measuring a shape of an S-body that has been fabricated in advance, or the S-body estimation data obtained by simulating based on the fabrication data is used as the comparison data (b) in FIG. 6. The deformation data may be expressed by a difference (difference of pixels) between an image of the shape indicated by the fabrication data and an image of the shape indicated by the comparison data, or may be expressed by a normal vector representing a difference between an outline of the shape indicated by the fabrication data and an outline of the shape indicated by the comparison data.

The fabrication control unit 120 generates a density distribution of powder in accordance with a predetermined policy based on the deformation data so as to prevent the S body from deforming. As an example of the policy for generating the density distribution, the fabrication control condition is determined such that the powder density is higher than a standard at a portion where the deformation is relatively large and is lower than the standard at a portion where the deformation is relatively small. The entire surface of one layer is divided into multiple segments, and the magnitude of deformation in each segment is classified into "large," "standard," and "small." The powder density can be allocated to "high," "standard," and "low," based on the classification. Alternatively, the magnitude of deformation in each segment is evaluated by a numerical value, and the powder density can be linearly or nonlinearly calculated from the numerical value.

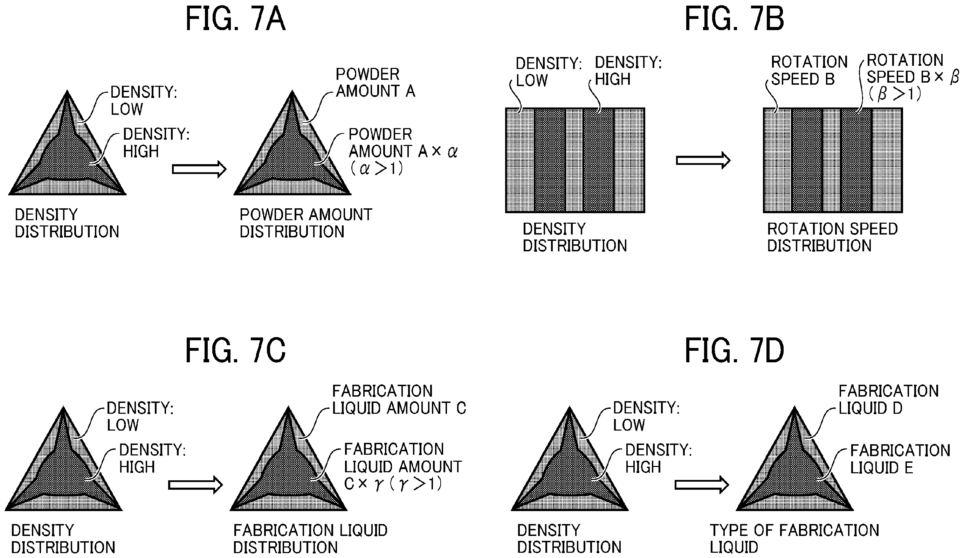

A description is given below of a method of determining the fabrication control condition for generating the density distribution of the powder illustrated in FIG. 6 with reference to FIGS. 7A to 7D. FIGS. 7A to 7D are diagrams illustrating various methods of determining the fabrication control condition for obtaining a predetermined density distribution of powder.

Examples of the fabrication control condition for generating the biased distribution of the powder density include an amount of the powder 20 supplied to each segment in the powder layer 31, a ratio of the rotation speed of the recoater roller 12 to the scanning speed of the recoater roller 12 when supplying the powder 20, an amount of the binder applied to the supplied powder, the type of the binder to be applied to the supplied powder, and a combination thereof. In the present embodiment, the recoater roller 12 serves as the supply device to supply powder 20 to the fabrication chamber 22.

FIG. 7A is a diagram illustrating the fabrication control condition for generating the biased distribution of the powder density, in which the amount of the powder 20 supplied to each segment in the powder layer 31 is controlled. The powder density is defined as the mass of powder per voxel. The voxel has a volume obtained by multiplying the thickness of one layer by the area of one pixel in the layer. The amount of powder supplied per area can be changed when the thickness of powder spread in one layer, the amount of the fabrication liquid 10 applied to one pixel, and the property of the fabrication liquid 10 are constant. For example, when a powder amount A is supplied into a relatively low-density portion, a powder amount A × α (α > 1) larger than the powder amount A is supplied into a relatively high-density portion to be generated. For example, a supply device may be provided with a powder supply port at a lower portion thereof to change the amount of the powder to be supplied. With such a configuration, the supply device can store powder and drop the powder to simply form a powder layer having the biased distribution of the powder density.

FIG. 7B is a diagram illustrating the fabrication control condition for generating the biased distribution of the powder density, in which the ratio of the rotation speed of the recoater roller 12 to the scanning speed of the recoater roller 12 as the supply device when supplying powder 20 is controlled. The ratio of the rotation speed of the recoater roller 12 to the scanning speed of the recoater roller 12 can be changed when the thickness of powder spread in one layer, the amount of the fabrication liquid 10 applied to one pixel having a predetermined area, and the property of the fabrication liquid 10 are constant. For example, when the scanning speed is constant and the recoater roller 12 is rotated at a rotation speed B above a low-density portion of the powder layer 31, the recoater roller 12 is rotated at a rotation speed B × β (β > 1), for example, above a high-density portion of the powder layer 31. As a result, the powder is filled with higher density in the fabrication layer. Alternatively, when the rotation speed is constant, the recoater roller 12 is moved above the high-density portion at the scanning speed lower than above the low-density portion. As a result, the powder is filled with higher density in the fabrication layer.

FIG. 7C is a diagram illustrating the fabrication control condition for generating the biased distribution of the powder density, in which the amount of the binder applied to the supplied powder is controlled. The amount of the fabrication liquid 10 applied per pixel having the predetermined area can be changed when the thickness of powder spread in one layer, the property of the fabrication liquid 10, the ratio of the rotation speed of the recoater roller 12 to the scanning speed of the recoater roller 12, and the amount of powder supplied per area are constant. For example, a fabrication liquid amount C × γ (γ > 1) applied to the relatively high-density portion is larger than the fabrication liquid amount C applied to the relatively low-density portion. As a result, the capillary force between the powder particles increases, and thus the powders attract each other, thereby increasing the density. That is, as the amount of the fabrication liquid 10 applied to the powder layer 31 increases, the powders more strongly attract each other, thereby increasing the density. A technique similar to a method of controlling an amount of ink applied by an inkjet technique can be adopted to adjust the amount of the fabrication liquid 10 applied to the powder layer 31.

FIG. 7D is a diagram illustrating the fabrication control condition for generating the biased distribution of the powder density, in which the type of the binder applied to the supplied powder is controlled. The property of the fabrication liquid 10 applied to the powder layer 31 can be changed when the thickness of powder spread in one layer, the amount of the fabrication liquid 10 applied per pixel having the predetermined area, the ratio of the rotation speed of the recoater roller 12 to the scanning speed of the recoater roller 12, and the amount of powder supplied per area are constant. For example, fabrication liquid D is applied to the relatively low-density portion, and fabrication liquid E is applied to the relatively high-density portion in addition to the fabrication liquid D. Fabrication liquid which is more likely to agglomerate the powder 20 is used among various fabrication liquids that differently agglomerate the powder 20. As a result, the capillary force between the powder particles increases, and thus the powders attract each other, thereby increasing the density. A technique similar to a method of printing a color image by the inkjet technique can be adopted to selectively apply the fabrication liquid 10 among the various types of the fabrication liquids. The number of types of the fabrication liquids 10 is not limited to two, and may be three or more. The types of fabrication liquids may include a mixture of the various types with a predetermined ratio.

Each of the fabrication control conditions for generating the biased distribution of the powder density illustrated in FIGS. 7A to 7D may be used alone, or multiple conditions may be used in combination.

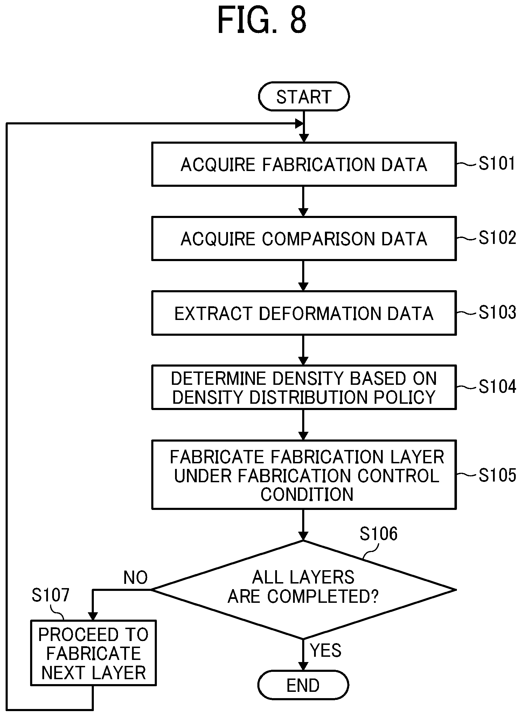

A description is given below of a three-dimensional fabrication method according to the present embodiment with reference to FIG. 8. FIG. 8 is a flowchart of the three-dimensional fabrication method performed by the three-dimensional fabrication apparatus 100 according to the present embodiment.

The fabrication process in FIG. 8 starts in response to a fabrication instruction from an operator. In step S101, the controller 500 acquires fabrication data for one layer. In step S102, the controller 500 acquires comparison data corresponding to the fabrication data for one layer. The comparison data is either the S-body estimation data estimated by simulation or the S-body actual measurement data obtained by fabrication and sintering in a previous cycle when the same three-dimensional object is repeatedly manufactured. The comparison data is selected by the selection switch 150 and input to the deformation extraction unit 130. In step S103, the controller 500 extracts the deformation data based on the fabrication date and the comparison date.

In step S104, the controller 500 determines whether the density is "high," "standard," or "low" or continuous values indicating the density) for segments (two dimensionally divided meshes or bands divided in the scanning direction of the recoater roller 12) or pixels divided from the entire powder layer based on the policy for generating the density distribution. In step S105, the controller 500 causes the supply device (e.g., the recoater roller 12) and the application device (e.g., the fabrication unit 5) to supply the fabrication material, form the fabrication material layer, and applies the binder to the fabrication material layer at each position while controlling the fabrication control condition so as to form the desired fabrication material layer having the spatially biased distribution of the density of the fabrication material.

In step S106, the controller 500 determines whether or not fabrication of all layers is completed. When the controller 500 determines that the fabrication of all layers has not been completed (NO in step SI06), the process branches to step S107. In step S107, the controller 500 causes the supply stage 23 to move upward and causes the fabrication stage 24 to move downward by one layer, and the process returns to step S101 to execute the process for the next layer. When the controller 500 determines that the fabrication of all layers has been completed (YES in step S106), the process ends. When multiple three-dimensional objects are continuously fabricated, the above-described process may be performed for the next cycle.

According to the above-described embodiments, a three-dimensional fabrication system, a three-dimensional fabrication method, and a carrier medium carrying computer readable code for carrying out the three-dimensional fabrication method can be provided to fabricate a three-dimensional object without deformation due to the post-treatment.

The above-described embodiments are suitably applicable to a method of forming a three-dimensional object in which the fabrication layers are stacked by repeatedly performing an operation of supplying powder to form a powder layer and binding the powder of the powder layer into a desired shape, in particular, a method including a post-treatment that may cause deformation of the three-dimensional object.

In the above-described embodiments, fabrication by the metal binder jetting has been described. However, the fabrication material is not limited to metal, and may be various materials including ceramics. In the above-described embodiments, fabrication by the binder jetting has been described. However, the above-described embodiments are applicable to any method in which a fabrication material is spread to form a fabrication material layer and a binder is applied to the fabrication material layer, in particular, are suitably applicable to a method including a post-treatment that sinters a precursor formed of the fabrication material to which a binder is applied to obtain a final fabricated body.

Each function in the exemplary embodiment may be implemented by a program described in C, C++, C# or Java (registered trademark). The program may be provided using any carrier medium that is readable by an apparatus, such as a hard disk drive, compact disc (CD) ROM, magneto-optical disc (MO), digital versatile disc (DVD), a flexible disc, electrically erasable programmable read-only memory (EEPROM), or erasable programmable read-only memory (EPROM). Alternatively, the program may be transmitted via network such that other apparatus can receive it.

Although several embodiments of the present disclosure have been described above, embodiments of the present disclosure are not limited to the above-described embodiments, and various modifications may be made without departing from the spirit and scope of the present disclosure that can be estimated by skilled person. Such modifications exhibiting functions and effects of the present disclosure are included within the scope of the present disclosure.

Any one of the above-described operations may be performed in various other ways, for example, in an order different from the one described above.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), a digital signal processor (DSP), a field programmable gate array (FPGA), and conventional circuit components arranged to perform the recited functions.

## Claims

1. A three-dimensional fabrication system (1000) comprising:
a supply device (12) configured to supply a fabrication material (20) to form a fabrication material layer (31);
an application device (5) configured to apply a binder (10) to the fabrication material layer (31); and
circuitry (500) configured to determine a fabrication control condition based on data of a shape of a three-dimensional object to be fabricated, to form the fabrication material layer (31) having a biased distribution of a density of the fabrication material (20).

2. The three-dimensional fabrication system (1000) according to claim 1,
wherein the fabrication material (20) is powder and the binder (10) is liquid,
wherein the fabrication control condition includes at least one of a condition for spreading the fabrication material (20) and a condition for applying the binder (10), and
wherein the density is defined in one of a state of the fabrication material layer (31) in which the fabrication material (20) is spread without the binder (10) and a state of the fabrication material layer (31) to which the binder (10) is applied.

3. The three-dimensional fabrication system (1000) according to claim 1 or 2, further comprising a measurement device (570) configured to measure a shape of an object,
wherein the circuitry (500) is further configured to:
cause the measurement device (570) to measure a shape of a sintered body obtained by sintering a sintering precursor that is formed by applying the binder (10) to the fabrication material layer (31);
compare a measured shape of the sintered body with the shape of the three-dimensional object to be fabricated to extract deformation data; and
change the fabrication control condition that affects the density, based on the deformation data.

4. The three-dimensional fabrication system (1000) according to claim 1 or 2, wherein the circuitry (500) is further configured to:
estimate a shape of a sintered body obtained by sintering a sintering precursor that is formed by applying the binder (10) to the fabrication material layer (31); and
compare an estimated shape of the sintered body with the shape of the three-dimensional object to be fabricated to extract deformation data; and
change the fabrication control condition that affects the density, based on the deformation data.

5. The three-dimensional fabrication system (1000) according to claim 1 or 2, wherein the circuitry (500) is further configured to:
determine whether a sintered body obtained by sintering a sintering precursor deforms from the sintering precursor based on the shape of the three-dimensional object to be fabricated, the sintering precursor formed by applying the binder (10) to the fabrication material layer (31); and
change the fabrication control condition that affects the density, based on whether the sintered body deforms from the sintering precursor.

6. The three-dimensional fabrication system (1000) according to any one of claims 1 to 5,
wherein the fabrication control condition includes an amount of the fabrication material (20) supplied to form the fabrication material layer (31).

7. The three-dimensional fabrication system (1000) according to any one of claims 1 to 6,
wherein the fabrication control condition includes a ratio of a rotation speed of the supply device (12) to a scanning speed of the supply device (12) supplying the fabrication material (20).

8. The three-dimensional fabrication system (1000) according to any one of claims 1 to 7,
wherein the fabrication control condition includes an amount of the binder (10) applied to the fabrication material layer (31).

9. The three-dimensional fabrication system (1000) according to any one of claims 1 to 8,
wherein the fabrication control condition includes a type of the binder (10) that differently agglomerates the fabrication material (20).

10. The three-dimensional fabrication system (1000) according to any one of claims 1 to 9, further comprising a detection device (580) configured to detect a density of powder,
wherein the circuitry (500) is further configured to cause the detection device (580) to detect the density of the fabrication material (20) in the fabrication material layer (31).

11. A three-dimensional fabrication method comprising:
supplying (105) a fabrication material (20) to form a fabrication material layer (31);
applying (105) a binder (10) to the fabrication material layer (31);
determining (104) a fabrication control condition based on data of a shape of a three-dimensional object to be fabricated; and
forming (105) the fabrication material layer (31) having a biased distribution of a density of the fabrication material (20) under the fabrication control condition.

12. A carrier medium carrying computer readable code for controlling a computer system to carry out a three-dimensional fabrication method, the method comprising:
supplying (105) a fabrication material (20) to form a fabrication material layer (31);
applying (105) a binder (10) to the fabrication material layer (31);
determining (104) a fabrication control condition based on data of a shape of a three-dimensional object to be fabricated; and
forming (105) the fabrication material layer (31) having a biased distribution of a density of the fabrication material (20) under the fabrication control condition.
